# EUROPÄISCHE PATENTSCHRIFT

(11) **EP 4 555 429 B1**
(45) Veröffentlichungstag und Bekanntmachung des Hinweises auf die Patenterteilung: **09.09.2026**
(21) Anmeldenummer: 23742000.5
(22) Anmeldetag: 11.07.2023
(51) Int. Cl.: G06F 18/15, G06F 18/22, G06F 18/24, G06V 20/56, G06V 10/82

(54) **OBJEKTKLASSIFIKATION ANHAND VON MESSDATEN AUS MEHREREN PERSPEKTIVEN UNTER NUTZUNG VON PSEUDO-LABELS**
OBJECT CLASSIFICATION BASED ON MEASUREMENT DATA FROM A PLURALITY OF PERSPECTIVES USING PSEUDO-LABELS
CLASSIFICATION D'OBJETS BASÉE SUR DES DONNÉES DE MESURE PROVENANT D'UNE PLURALITÉ DE PERSPECTIVES À L'AIDE DE PSEUDO-MARQUEURS

(30) Priorität: 12.07.2022 DE 102022207091
(43) Veröffentlichungstag der Anmeldung: 21.05.2025
(73) Patentinhaber: Robert Bosch GmbH, 70442 Stuttgart (DE)
(72) Erfinder: JUNGE, Beke, 31139 Hildesheim (DE); GIGENGACK, Fabian, 30966 Hemmingen (DE); SULTAN, Azhar, Wells, TN2 3RR (GB)
(86) Internationale Anmeldenummer: PCT/EP2023/069168
(87) Internationale Veröffentlichungsnummer: WO 2024/013158

(56) Entgegenhaltungen:
- CN-A- 111 832 605
- DSHAHID380: "Convolutional Neural Network. Learn Convolutional Neural Network from... | by dshahid380 | Towards Data Science", 24 February 2019 (2019-02-24), XP093078814, Retrieved from the Internet <URL:https://towardsdatascience.com/covolutional-neural-network-cb0883dd6529> [retrieved on 20230905]
- SINGHAL REKHA ET AL: "Polystore++: Accelerated Polystore System for Heterogeneous Workloads", 2019 IEEE 39TH INTERNATIONAL CONFERENCE ON DISTRIBUTED COMPUTING SYSTEMS (ICDCS), IEEE, 7 July 2019 (2019-07-07), pages 1641 - 1651, XP033651775, DOI: 10.1109/ICDCS.2019.00163
- ANONYMOUS: "Active Learning | Papers With Code", 5 September 2023 (2023-09-05), XP093078820, Retrieved from the Internet <URL:https://paperswithcode.com/task/active-learning> [retrieved on 20230905]

## Beschreibung

Die vorliegende Erfindung betrifft das Training neuronaler Netzwerke zum Erkennen und Klassifizieren von Objekten anhand von Messdaten, die aus verschiedenen Perspektiven, und/oder mit verschiedenen Messmodalitäten, aufgenommen wurden. Dabei werden iterativ erzeugte Pseudo-Labels zur Verbesserung der Trainingsqualität genutzt.

### Stand der Technik

Zum zumindest teilweise automatisierten Führen eines Fahrzeugs im Straßenverkehr wird eine Repräsentation des Umfelds des Fahrzeugs benötigt, die auch die in diesem Umfeld befindlichen Objekte angibt. Daher wird das Umfeld des Fahrzeugs in der Regel mit mehreren Kameras und/oder anderen Sensoren, wie etwa Radar-Sensoren oder Lidar-Sensoren, überwacht. Mit neuronalen Klassifikationsnetzwerken werden die jeweils erhaltenen Messdaten dann dahingehend ausgewertet, welche Objekte im Umfeld des Fahrzeugs vorhanden sind.

Die US 2021/012 166 A1, die WO 2020/061 489 A1, die US 10,762,359 B2 und die JP 6 614 611 B2 offenbaren, derartige neuronale Netzwerke mit einem "contrastive loss" zu trainieren. Hiermit können die neuronalen Netzwerke beispielsweise dahingehend aufeinander abgestimmt werden, dass sie Bilder, die gleiche Objekte zeigen, auf gleiche Repräsentationen abbilden. Dies befreit jedoch noch nicht von der Pflicht, für jede Kameraperspektive genügend gelabelte Trainingsbeispiele bereitzustellen.

Die Anmeldung CN 111 832 605 A offenbart ein Verfahren und eine Vorrichtung zum unüberwachten Trainieren eines Bildklassifikationsmodells. Das Bildklassifikationsmodell umfasst einen Merkmalsextraktor und einen Klassifikator, die beide als neuronale Netze ausgebildet sind. Das Verfahren optimiert die Parameter des Merkmalsextraktors und des Klassifikators auf der Grundlage einer Klassifikations-Loss-Funktion und einer kontrastiven Loss-Funktion.

### Offenbarung der Erfindung

Die Erfindung stellt ein Verfahren zum Trainieren eines oder mehrerer neuronaler Netzwerke bereit. Hierbei handelt es sich speziell um neuronale Netzwerke, die die Messdaten, insbesondere Bilder, die aus verschiedenen Perspektiven, und/oder mit verschiedenen Messmodalitäten, aufgenommen wurden, zu Klassifikations-Scores in Bezug auf eine oder mehrere Klassen einer vorgegebenen Klassifikation verarbeiten. Die Klassen können sich insbesondere beispielsweise auf verschiedene Typen von Objekten beziehen, die in einem bei der Aufnahme der Messdaten sensierten Bereich vorhanden sind.

Das Verfahren beginnt damit, dass Trainings-Beispiele für Messdaten bereitgestellt werden. Diese Trainings-Beispiele umfassen sowohl mit Soll-Klassifikations-Scores gelabelte Trainings-Beispiele als auch ungelabelte Trainings-Beispiele.

Die Trainings-Beispiele werden von dem oder den neuronalen Netzwerken zu Klassifikations-Scores verarbeitet. Hierbei wird auch ein Zwischenprodukt erfasst, aus dem die Klassifikations-Scores gebildet werden. Dieses Zwischenprodukt kann insbesondere beispielsweise eine Repräsentation der Messdaten sein, die eine deutlich geringere Dimensionalität hat als die Messdaten selbst, aber noch eine höhere Dimensionalität als die letztendlich ermittelten Klassifikations-Scores.

Die Klassifikations-Scores können kontinuierliche Werte annehmen. Aus diesen kontinuierlichen Werten folgt jedoch nach einer vorgegebenen Vorschrift auch eine bevorzugte Klasse. Beispielsweise kann diejenige Klasse, für die der Klassifikations-Score am größten ist, als bevorzugte Klasse gewertet werden.

Es wird nun bezüglich der gelabelten Trainings-Beispiele mit einer vorgegebenen Kostenfunktion (Loss-Funktion) bewertet, inwieweit
- die Klassifikations-Scores den jeweiligen Soll-Klassifikations-Scores entsprechen und
- Zwischenprodukte, die aus zueinander ähnlichen Trainings-Beispielen gebildet werden, zueinander ähnlich sind, während gleichzeitig
Zwischenprodukte, die aus zueinander unähnlichen Trainings-Beispielen gebildet werden, zueinander unähnlich sind.

Hierbei kann die Ähnlichkeit von Trainings-Beispielen mit einer beliebigen Metrik gemessen werden. In diese Metrik kann beispielswiese auch eine Ähnlichkeit oder Gleichheit von Soll-Klassifikations-Scores eingehen.

Zu diesem Zweck enthält die Kostenfunktion einen Klassifikations-Loss, der die Übereinstimmung mit den Soll-Klassifikations-Scores misst, und einen kontrastiven Loss, der die Ähnlichkeit der Zwischenprodukte misst.

Es werden nun Parameter, die das Verhalten des oder der neuronalen Netzwerke charakterisieren, optimiert mit dem Ziel, dass bei weiterer Verarbeitung von Trainings-Beispielen die Bewertung durch die Kostenfunktion voraussichtlich verbessert wird. Beispielsweise kann der Wert der Loss-Funktion zu Gradienten, entlang derer die einzelnen Parameter jeweils im nächsten Lernschritt zu verändern sind, zurückpropagiert werden. Beispielsweise kann es in dem oder den neuronalen Netzwerken eine Arbeitsteilung dahingehend geben, dass ein bestimmter Teil der Architektur das Zwischenprodukt bildet und ein anderer Teil der Architektur aus dem Zwischenprodukt die Klassifikations-Scores ermittelt. Dann wirkt der kontrastive Loss hauptsächlich auf den Teil, der das Zwischenprodukt bildet, und der Klassifikations-Loss wirkt hauptsächlich auf den Teil, der die Klassifikations-Scores ermittelt.

Es wird nun geprüft, inwieweit es Teilmengen der Trainings-Beispiele gibt, für die Folgendes gilt:
- Die Teilmenge enthält mindestens ein ungelabeltes Trainings-Beispiel;
- die aus den Trainings-Beispielen der Teilmenge gebildeten Zwischenprodukte sind nach Maßgabe eines vorgegebenen Kriteriums zueinander ähnlich.

Zusätzlich kann optional noch geprüft werden, ob diese Zwischenprodukte
- bei der weiteren Verarbeitung in dem oder den neuronalen Netzwerken auf Klassifikations-Scores abgebildet werden, die zumindest die gleiche bevorzugte Klasse anzeigen, und/oder
- auf Klassifikations-Scores abgebildet werden, die auf Grund einer vorgegebenen Fusionsstrategie als semantisch ähnlich anzusehen sind.

Wenn beispielsweise Repräsentationen dreier aufeinanderfolgender Bilder in einem Video-Datenstrom zueinander ähnlich sind, aber auf unterschiedliche bevorzugte Klassen abgebildet werden (etwa zweimal "PKW" und einmal "Kleintransporter"), kann beispielsweise eine Mehrheitsentscheidung getroffen werden. Auch können beispielsweise Limousinen und Cabrios, die in unterschiedliche Klassen einsortiert werden, als zueinander ähnlich angesehen werden, weil sie beide der übergeordneten Klasse "PKW" angehören. Dies hängt von der jeweils vorliegenden Anwendung ab.

Trainings-Beispiele, die diese Prüfung nicht bestehen, können dennoch für das Training des kontrastiven Loss weiterverwendet werden. Sie müssen also nicht komplett verworfen werden.

Hierbei können optional noch räumliche und/oder zeitliche Filterungen und sonstige Vorverarbeitungen vorgenommen werden. Beispielsweise können anhand von Triangulation, Odometrie, Simultaneous Location and Mapping (SLAM) oder anderen bekannten Algorithmen Objekte vorgeschlagen werden, die möglicherweise von mehreren Perspektiven aus gesehen wurden. Auch auf eine manuelle Annotation eines solchen Objekts hin kann dieses Objekt genutzt werden, um die aus verschiedenen Trainings-Beispielen ermittelten Klassifikations-Scores und Zwischenprodukte miteinander zu vergleichen. Der Vergleich muss also beispielsweise nicht den kompletten Bildinhalt betreffen, sondern kann auf relevante Objekte fokussiert werden.

Sofern es ungelabelte Trainings-Beispiele mit gleichen bevorzugten Klassen und ähnlichen Zwischenprodukten gibt, werden die ungelabelten Trainings-Beispiele der Teilmenge mit dieser bevorzugten Klasse als Label ("Pseudo-Label") zu den gelabelten Trainings-Beispielen überführt. Das oder die neuronalen Netzwerke werden dann mit den auf diese Weise aufgewerteten Trainings-Beispielen trainiert. Dieses Verfahren kann iterativ so lange fortgesetzt werden, bis eine vorgegebene Abbruchbedingung erfüllt ist. Die Abbruchbedingung kann beispielsweise beinhalten, dass es von Iteration zu Iteration keine nennenswerten Gewinne an neu mit "Pseudo-Labels" versehenen Trainings-Beispielen mehr gibt.

Wenn sich also beispielsweise mehrere neuronale Netzwerke, die aus verschiedenen Perspektiven aufgenommene Trainings-Beispiele verarbeiten, darin einig sind, dass diese Trainings-Beispiele auf das Vorhandensein eines Objekts der Klasse "Fahrzeug" hindeuten, und wenn gleichzeitig die aus diesen Trainings-Beispielen erzeugten Zwischenprodukte hinreichend ähnlich sind, dann ist die Wahrscheinlichkeit hoch, dass diese Trainings-Beispiele tatsächlich das Vorhandensein eines Fahrzeugs anzeigen. Die ursprünglich ungelabelten Trainings-Beispiele können dann also fortan als Trainings-Beispiele für die Klasse "Fahrzeug" genutzt werden.

Wenn beispielsweise bei der Überwachung des Umfelds eines Fahrzeugs ein überholendes fremdes Fahrzeug beobachtet wird, so kann sich dieses nicht gleichzeitig vor und hinter dem eigenen Fahrzeug befinden. Vielmehr wird das fremde Fahrzeug zunächst hinter, dann neben und schließlich vor dem eigenen Fahrzeug sichtbar sein und hierbei zwischen den Erfassungsbereichen verschiedener Kameras wechseln, die das Fahrzeug jeweils aus unterschiedlichen Perspektiven sehen. Unter Hinzunahme der besagten Filterungen und Vorverarbeitungen können Pseudo-Labels erhalten werden, die zu einem vergleichbaren Anteil zutreffend sind wie manuell vergebene Labels.

Wenn ein Fahrzeug um eine Kurve fährt und dabei von nur einer Kamera beobachtet wird, wird es von dieser einen Kamera aus mehreren Perspektiven gesehen. Aus diesen mehreren Ansichten können wiederum mehrere Bilder des Fahrzeugs gewonnen werden, die in gewisser Weise miteinander gekoppelt sind, d.h. nicht im Widerspruch zueinander stehen sollten.

Mit diesem Trainingsverfahren kann ausgehend von zunächst nur wenigen Trainings-Beispielen der gelabelte Anteil der Trainings-Beispiele iterativ immer weiter vergrößert werden. Das oder die neuronalen Netzwerke können dann nach Abschluss des Trainings unmittelbar für die Klassifikation weiterer ungesehener Messdaten verwendet werden. Unabhängig hiervon können aber auch die Trainings-Beispiele, von denen nun ein größerer Anteil als zuvor gelabelt ist, genutzt werden, um auch andere neuronale Netzwerke zu trainieren. Dies bedeutet für das Training insgesamt eine erhebliche Kostenersparnis, da das manuelle Labeln von Trainings-Beispielen der größte Treiber für die Kosten des Trainings ist.

In einer vorteilhaften Ausgestaltung wird bezüglich der ungelabelten Trainings-Beispiele mit der Kostenfunktion bewertet, inwieweit aus diesen Trainings-Beispielen erhaltene Zwischenprodukte, die von dem oder den neuronalen Netzwerken zumindest auf die gleiche bevorzugte Klasse abgebildet werden, zueinander ähnlich sind. Dann können auch die ungelabelten Trainings-Beispiele genutzt werden, um das oder die neuronalen Netzwerke darauf zu trainieren, für gleiche Objekte gleiche Zwischenprodukte zu bilden.

Es wird mindestens ein neuronales Netzwerk gewählt, das einen Merkmalsextraktor und einen Klassifikator beinhaltet. Hierbei werden die Trainings-Beispiele dem Merkmalsextraktor zugeführt. Die Ausgabe des Merkmalsextraktors wird als Zwischenprodukt dem Klassifikator zugeführt. Der kontrastive Loss kann dann im Wesentlichen auf die Parameter des Merkmalsextraktors wirken, und der Klassifikations-Loss kann im Wesentlichen auf die Parameter des Klassifikators wirken.

Der Merkmalsextraktor kann insbesondere beispielsweise eine Abfolge mehrerer Faltungsschichten beinhalten, die jeweils durch Anwenden eines oder mehrere Filterkerne in einem vorgegebenen Raster auf ihre Eingabe eine Merkmalskarte dieser Eingabe bilden. Die letzte Merkmalskarte in einer so entstehenden Abfolge von Merkmalskarten hat eine deutlich geringere Dimensionalität als etwa ein Bild als Trainings-Beispiel, gleichzeitig jedoch noch eine deutlich größere Dimensionalität als die letztendlich ausgegebenen Klassifikations-Scores.

Der Klassifikator kann insbesondere beispielsweise mindestens eine vollvernetzte Schicht beinhalten. Eine solche Schicht kann beispielsweise eine Merkmalskarte zu einem Vektor von Klassifikations-Scores in Bezug auf die verfügbaren Klassen verdichten.

Für das Training mit den aufgewerteten Trainings-Beispielen können in einer Ausgestaltung die Parameter des oder der neuronalen Netze neu initialisiert werden. Der Vorteil dieser Ausgestaltung ist, dass das neue Training dann von Anfang an auf einem umfangreichen Satz gelabelter Trainings-Beispiele basiert und frei von Fehlentwicklungen ist, die durch das vorherige Training mit einem nur geringen Anteil an gelabelten Trainings-Beispielen in die Parameter gekommen sein können. Der Preis hierfür ist, dass damit auch die in das bisherige Training investierte Rechenzeit verworfen wird.

In einer alternativen Ausgestaltung baut daher das Training mit den aufgewerteten Trainings-Beispielen auf dem vorhandenen Stand der Parameter des oder der neuronalen Netzwerke auf. Diese Ausgestaltung ist besonders dann vorteilhaft, wenn die vorhandenen Trainings-Beispiele sehr zahlreich und/oder sehr komplex sind. Zum einen wäre dann der Rechenaufwand, der mit einem vollständigen Neubeginn des Trainings verworfen würde, vergleichsweise hoch. Zum anderen ermöglicht es ein reichhaltiger Satz von Trainings-Beispielen, eventuelle Fehlentwicklungen aus dem vorherigen Training zu korrigieren.

In einer weiteren besonders vorteilhaften Ausgestaltung werden dem oder den neuronalen Netzwerken nach dem Training Records von Messdaten zugeführt, die aus verschiedenen Perspektiven, und/oder mit verschiedenen Abbildungsmodalitäten, aufgenommen wurden. Diese Records sind typischerweise Messdaten, die das oder die neuronalen Netzwerke im vorherigen Training nicht gesehen haben. Dies ist jedoch nicht zwingend. Hierbei ist der Begriff "Record" analog zu seiner englischen Bedeutung im Zusammenhang mit Datenbanken zu verstehen. Ein Record entspricht einem einzelnen Eintrag in der Datenbank, der bestimmte Attribute haben kann, vergleichbar mit einer einzelnen Karteikarte in einem Karteikasten. Beispielsweise kann ein Record ein Bild, einen Radar-Scan oder einen Lidar-Scan umfassen. Der deutsche Begriff "Datensatz" wäre ebenfalls zutreffend, ist jedoch auf dem Fachgebiet des Machine Learnings mit der Gesamtheit aller Records belegt, vergleichbar mit dem kompletten Karteikasten.

Durch das zuvor beschriebene Training mit "Pseudo-Labels" kann im Wirkbetrieb mit im Training ungesehenen Records von Messdaten ein besseres Verhältnis von Klassifikationsgenauigkeit zu Trainingsaufwand erzielt werden als bei einem Training, bei dem ausschließlich manuell gelabelte Trainings-Beispiele zum Einsatz kommen. Das manuelle Labeln ist der "Goldstandard" in Bezug auf die Genauigkeit, jedoch ist der Aufwand ungleich größer als beim voll automatisierten Training mit "Pseudo-Labels".

In einer weiteren vorteilhaften Ausgestaltung wird eine Ähnlichkeit von aus verschiedenen Records von Messdaten ermittelten Zwischenprodukten bei gleichzeitiger Übereinstimmung der aus diesen Records jeweils ermittelten bevorzugten Klassen als Indikator dafür gewertet, dass diese Records das Vorhandensein des gleichen Objekts in einem oder mehreren Erfassungsbereichen eines oder mehrerer Sensoren anzeigen. Das Zwischenprodukt enthält noch deutlich mehr Information als die maximal verdichteten Klassifikations-Scores. Auf diese Weise können insbesondere beispielsweise bei der gleichzeitigen Erkennung einer Vielzahl von Objekten aus den Messdaten "Geister-Detektionen" von Objektinstanzen, die in Wahrheit gar nicht vorhanden sind, unterdrückt werden.

In einer weiteren vorteilhaften Ausgestaltung kann die Wertung, dass die Records das Vorhandensein des gleichen Objekts in einem oder mehreren Erfassungsbereichen anzeigen, zusätzlich davon abhängig gemacht wird, dass ein räumlicher und/oder zeitlicher Zusammenhang zwischen den Records eine vorgegebene Bedingung erfüllt. Auf diese Weise kann beispielsweise berücksichtigt werden, dass ein und dasselbe Objekt realistischerweise nicht gleichzeitig an zwei weit auseinander liegenden Orten sein kann.

Es werden Messdaten bzw. Trainings-Beispiele gewählt, die von mehreren Sensoren aufgenommen wurden. In einer vorteilhaften Ausgestaltung weisen die Sensoren nicht-identische räumliche Erfassungsbereiche auf.

Beispielsweise kann das Umfeld eines Fahrzeugs mit mehreren Sensoren überwacht werden, deren Erfassungsbereiche sich teilweise überlappen, so dass das Umfeld komplett abgedeckt wird.

Die Messdaten bzw. Trainings-Beispiele können insbesondere Kamerabilder, Videobilder, Wärmebilder, Ultraschallbilder, Radar-Daten und/oder Lidar-Daten umfassen. Gerade bei der Überwachung des Umfelds von Fahrzeugen kommt häufig mehr als eine Messmodalität zum Einsatz. Es ist sehr schwierig, für eine einzelne Messmodalität zu garantieren, dass diese unter allen Umständen und in allen Verkehrssituationen einwandfrei funktioniert. Beispielsweise kann eine Kamera durch direkten Einfall von Sonnenlicht so übersteuert werden, dass sie nur noch eine weiße Fläche als Bild anzeigt. Diese Störung wirkt jedoch nicht auf einen gleichzeitig betriebenen Radarsensor, mit dem dann zumindest noch eine eingeschränkte Beobachtung möglich ist. Das hier vorgeschlagene Trainingsverfahren kann eines oder mehrere neuronale Netzwerke sehr gut dazu anleiten, Messdaten, die mit mehreren Messmodalitäten aufgenommen wurden, zu einer Detektion eines oder mehrerer Objekte zusammenzuführen.

In einer weiteren vorteilhaften Ausgestaltung wird aus der Ausgabe des oder der trainierten neuronalen Netzwerke ein Ansteuersignal ermittelt. Es wird dann ein Fahrzeug, ein Fahrassistenzsystem, ein System für die Qualitätskontrolle, ein System für die Überwachung von Bereichen, und/oder ein System für die medizinische Bildgebung, mit dem Ansteuersignal angesteuert. Die Wahrscheinlichkeit, dass die Reaktion des jeweils angesteuerten Systems der durch die eingegebenen Records von Messdaten verkörperten Situation angemessen ist, ist dann vorteilhaft erhöht. Zu dieser verbesserten Leistung im Wirkbetrieb des neuronalen Netzwerks trägt insbesondere auch die Nutzung von Pseudo-Labels während des Trainings bei. Insbesondere ist die Wahrscheinlichkeit vermindert, dass das angesteuerte System auf "Geister-Detektionen" von Objekten in den Messdaten reagiert. Derartige "Geister-Detektionen" könnten beispielsweise dazu führen, dass ein angesteuertes Fahrzeug eine automatische Vollbremsung durchführt, ohne dass es hierfür einen sachlichen (und für andere Verkehrsteilnehmer ersichtlichen) Grund gibt.

Das Verfahren kann insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern und/oder Compute-Instanzen ausgeführt werden, den oder die Computer bzw. Compute-Instanzen dazu veranlassen, das beschriebene Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen. Compute-Instanzen können beispielsweise virtuelle Maschinen, Container oder auch serverlose Ausführungsumgebungen, in denen maschinenlesbare Anweisungen ausgeführt werden können, sein.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin können ein oder mehrere Computer mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 zum Trainieren eines oder mehrerer neuronaler Netzwerke 1;
Figur 2 Veranschaulichung des Trainings gemäß dem Verfahren 100;
Figur 3 Veranschaulichung der Gewinnung von Pseudo-Labels im Rahmen des Verfahrens 100.

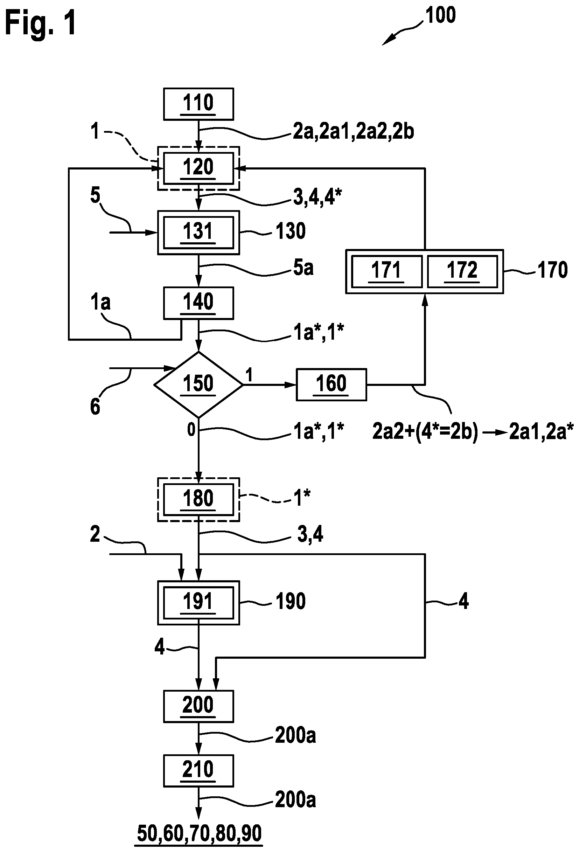

Figur 1 ist ein schematisches Ablaufdiagramm eines Ausführungsbeispiels des Verfahrens 100 zum Trainieren eines oder mehrerer neuronaler Netzwerke 1. Das oder die neuronalen Netzwerke 1 verarbeiten Messdaten 2, insbesondere Bilder, die aus verschiedenen Perspektiven, und/oder mit verschiedenen Messmodalitäten, aufgenommen wurden, zu Klassifikations-Scores 4 in Bezug auf eine oder mehrere Klassen einer vorgegebenen Klassifikation.

In Schritt 110 werden Trainings-Beispiele 2a für Messdaten 2 bereitgestellt. Diese Trainings-Beispiele 2a umfassen sowohl mit Soll-Klassifikations-Scores 2b gelabelte Trainings-Beispiele 2a1 als auch ungelabelte Trainings-Beispiele 2a2.

In Schritt 120 werden die Trainings-Beispiele 2a werden von dem oder den neuronalen Netzwerken 1 zu Klassifikations-Scores 4 verarbeitet. Im Zuge dieser Verarbeitung wird auch ein Zwischenprodukt 3 erfasst, aus dem die Klassifikations-Scores 4 gebildet werden.

In Schritt 130 wird bezüglich der gelabelten Trainings-Beispiele 2a1 mit einer vorgegebenen Kostenfunktion (Loss-Funktion) 5 bewertet, inwieweit
- die Klassifikations-Scores 4 den jeweiligen Soll-Klassifikations-Scores 2b entsprechen (Klassifikations-Loss) und
- Zwischenprodukte 3, die aus Trainings-Beispielen 2a1 mit gleichen Soll-Klassifikations-Scores 2b gebildet werden, zueinander ähnlich sind.

Optional kann zusätzlich gemäß Block 131 bezüglich der ungelabelten Trainings-Beispiele 2a2 mit der Kostenfunktion 5 bewertet werden, inwieweit aus diesen Trainings-Beispielen 2a2 erhaltene Zwischenprodukte 3, die von dem oder den neuronalen Netzwerken 1 zumindest auf die gleiche bevorzugte Klasse 4* abgebildet werden, zueinander ähnlich sind. Das Training im Hinblick auf den kontrastiven Loss kann also auch die ungelabelten Trainings-Beispiele 2a2 nutzen.

In Schritt 140 werden Parameter 1a, die das Verhalten des oder der neuronalen Netzwerke 1 charakterisieren, optimiert mit dem Ziel, dass bei weiterer Verarbeitung von Trainings-Beispielen 2a1 die Bewertung 5a durch die Kostenfunktion 5 voraussichtlich verbessert wird. Der fertig optimierte Zustand der Parameter 1a ist mit dem Bezugszeichen 1a* bezeichnet. Dementsprechend ist der fertig trainierte Zustand des oder der neuronalen Netzwerke 1 mit dem Bezugszeichen 1* bezeichnet.

In Schritt 150 wird geprüft, ob die für eine Teilmenge der Trainings-Beispiele 2a, die mindestens ein ungelabeltes Trainings-Beispiel 2a2 enthält, gebildeten Zwischenprodukte 3 nach Maßgabe eines vorgegebenen Kriteriums 6 zueinander ähnlich sind. Wie zuvor erläutert, kann optional weiterhin geprüft werden, ob die Zwischenprodukte 3
- auf Klassifikations-Scores 4 abgebildet werden, die zumindest die gleiche bevorzugte Klasse 4* anzeigen, und/oder
- auf Klassifikations-Scores 4 abgebildet werden, die auf Grund einer vorgegebenen Fusionsstrategie als semantisch ähnlich anzusehen sind.

Wenn die Prüfung positiv verläuft (Wahrheitswert 1), werden in Schritt 160 die ungelabelten Trainings-Beispiele 2a2 der Teilmenge mit dieser bevorzugen Klasse 4* als Label 2b zu den gelabelten Trainings-Beispielen 2a1 überführt. Somit wird insgesamt eine Menge aufgewerteter Trainings-Beispiele 2a* erhalten.

Mit diesen aufgewerteten Trainings-Beispielen 2a* werden in Schritt 170 das oder die neuronalen Netzwerke 1 trainiert.

Hierbei können gemäß Block 171 die Parameter 1a des oder der neuronalen Netzwerke 1 neu initialisiert werden.

Alternativ kann gemäß Block 172 das Training mit den aufgewerteten Trainings-Beispielen 2a* auf dem vorhandenen Stand der Parameter 1a des oder der neuronalen Netzwerke 1 aufbauen.

In dem in Figur 1 gezeigten Beispiel besteht die Abbruchbedingung für die Iterationen des Trainings darin, dass in Schritt 150 keine weiteren ungelabelten Trainings-Beispiele 2a2 gefunden werden, die mit neuen Pseudo-Labels versehen werden können (Wahrheitswert 0).

Nach dem Training werden dem oder den trainierten neuronalen Netzwerken 1* Records von Messdaten 2 zugeführt, die aus verschiedenen Perspektiven, und/oder mit verschiedenen Abbildungsmodalitäten, aufgenommen wurden.

Es kann dann in Schritt 190 eine Ähnlichkeit von aus verschiedenen Records von Messdaten 2 ermittelten Zwischenprodukten 3 als Indikator dafür gewertet werden, dass diese Records das Vorhandensein des gleichen Objekts in einem oder mehreren Erfassungsbereichen eines oder mehrerer Sensoren anzeigen.

Hierbei kann gemäß Block 191 die Wertung, dass die Records das Vorhandensein des gleichen Objekts in einem oder mehreren Erfassungsbereichen anzeigen, zusätzlich davon abhängig gemacht werden, dass ein räumlicher und/oder zeitlicher Zusammenhang zwischen den Records eine vorgegebene Bedingung erfüllt.

In Schritt 200 kann aus der Ausgabe 4 des oder der trainierten neuronalen Netzwerke 1* ein Ansteuersignal 200a ermittelt werden.

In Schritt 210 kann dann ein Fahrzeug 50, ein Fahrassistenzsystem 60, ein System 70 für die Qualitätskontrolle, ein System 80 für die Überwachung von Bereichen, und/oder ein System 90 für die medizinische Bildgebung, mit dem Ansteuersignal 200a angesteuert werden.

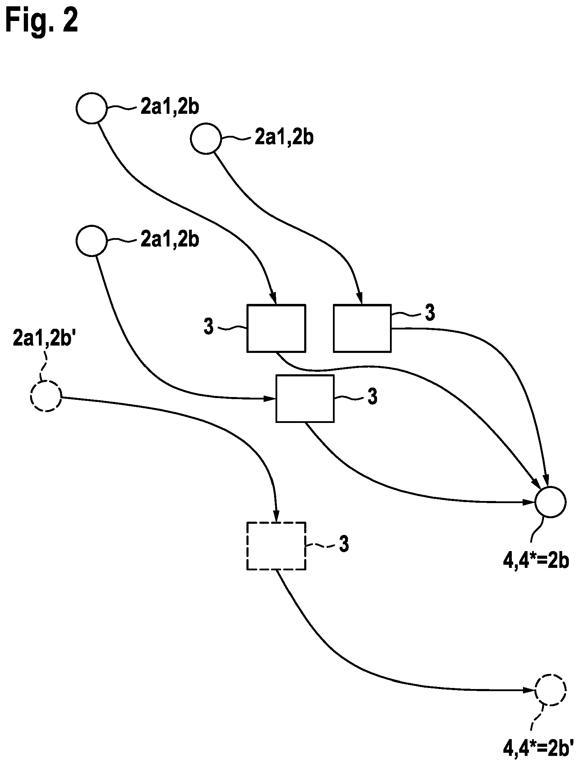

Figur 2 veranschaulicht den Zustand, der mit dem zuvor beschriebenen Training angestrebt wird. In dem in Figur 2 gezeigten Beispiel gibt es einige Trainings-Beispiele 2a1, die mit einem Soll-Klassifikations-Score 2b gelabelt sind, sowie ein weiteres Trainings-Beispiel 2a1, das mit einem anderen Soll-Klassifikations-Score 2b' gelabelt ist. Die Ähnlichkeit der gelabelten Trainings-Beispiele 2a1 wird in dem in Figur 2 gezeigten Beispiel der Übersichtlichkeit halber daran gemessen, ob diese gelabelten Trainings-Beispiele 2a1 gleichen Soll-Klassen 2b angehören.

Der Beitrag des Klassifikations-Loss zur Kostenfunktion führt im Laufe des Trainings dazu, dass für die mit dem Soll-Klassifikations-Score 2b, etwa einem "one-hot" Score für eine bestimmte Klasse, gelabelten Trainings-Beispiele 4a1 von dem oder den neuronalen Netzwerken 1 auch genau auf diese Klasse 2b als bevorzugte Klasse 4* abgebildet werden. Der Beitrag des kontrastiven Loss zur Kostenfunktion 5 führt dazu, dass die auf dem Weg hierzu erzeugten Zwischenprodukte 3 nahe beieinander liegen.

Hingegen wird das mit dem Soll-Klassifikations-Score 2b' gelabelte Trainings-Beispiel 2a1 auch auf diese Klasse 2b' als bevorzugte Klasse 4* abgebildet. Dementsprechend ist auch das auf dem Weg hierher erzeugte Zwischenprodukt 3 weit von den anderen Zwischenprodukten 3 entfernt.

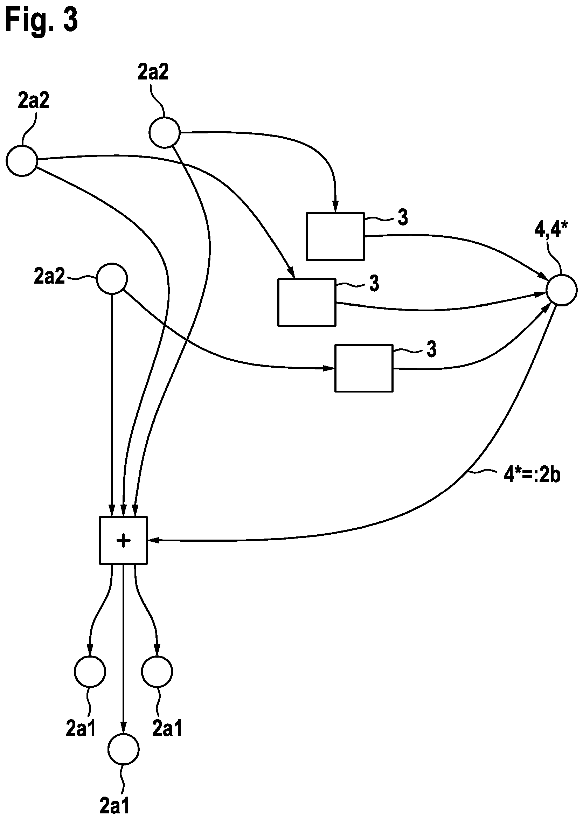

Figur 3 veranschaulicht die Gewinnung von Pseudo-Labels. In dem in Figur 3 gezeigten Beispiel werden drei ungelabelte Trainings-Beispiele 2a2 auf ein und dieselbe bevorzugte Klasse 4* abgebildet. Zugleich liegen die hierbei erhaltenen Zwischenprodukte 3 nahe beieinander, sind also ähnlich. In Antwort hierauf wird die bevorzugte Klasse 4* als neues Pseudo-Label 2b festgelegt und den besagten bislang ungelabelten Trainings-Beispielen 2a2 zugeordnet. Diese Trainings-Beispiele 2a2 werden somit zu gelabelten Trainings-Beispielen 2a1.

## Patentansprüche

1. Verfahren (100) zum Trainieren eines oder mehrerer neuronaler Netzwerke (1), die von mehreren Sensoren aufgenommene Messdaten (2), insbesondere Bilder, die aus verschiedenen Perspektiven, und/oder mit verschiedenen Messmodalitäten, aufgenommen wurden, zu Klassifikations-Scores (4) in Bezug auf eine oder mehrere Klassen einer vorgegebenen Klassifikation verarbeiten, mit den Schritten:
• es werden Trainings-Beispiele (2a) für Messdaten (2) bereitgestellt (110), die sowohl mit Soll-Klassifikations-Scores (2b) gelabelte Trainings-Beispiele (2a1) als auch ungelabelte Trainings-Beispiele (2a2) umfassen;
• die Trainings-Beispiele (2a) werden von dem oder den neuronalen Netzwerken (1) zu Klassifikations-Scores (4) verarbeitet (120), wobei auch ein Zwischenprodukt (3), das eine Merkmalskarte und die Ausgabe eines Merkmalsextraktors ist, erfasst wird, aus dem die Klassifikations-Scores (4) gebildet werden;
• bezüglich der gelabelten Trainings-Beispiele (2a1) wird mit einer vorgegebenen Kostenfunktion (5), die einen Klassifikations-Loss, der die Übereinstimmung mit den Klassifikations-Scores (4) misst, und einen kontrastiven Loss, der die Ähnlichkeit der Zwischenprodukte (3) misst, enthält, bewertet (130), inwieweit
∘ die Klassifikations-Scores (4) den jeweiligen Soll-Klassifikations-Scores (2b) entsprechen und
∘ Zwischenprodukte (3), die aus zueinander ähnlichen Trainings-Beispielen (2a1) gebildet werden, zueinander ähnlich sind, während gleichzeitig Zwischenprodukte (3), die aus zueinander unähnlichen Trainings-Beispielen (2a1) gebildet werden, zueinander unähnlich sind; und
• Parameter (1a), die das Verhalten des oder der neuronalen Netzwerke (1) charakterisieren, werden optimiert (140) mit dem Ziel, dass bei weiterer Kostenfunktion (5) voraussichtlich verbessert wird;
wobei es in dem oder den neuronalen Netzwerken (1) eine Arbeitsteilung dahingehend gibt, dass ein bestimmter Teil der Architektur das Zwischenprodukt bildet und ein anderer Teil der Architektur aus dem Zwischenprodukt (3) die Klassifikations-Scores (4) ermittelt, so dass der kontrastive Loss hauptsächlich auf den Teil wirkt, der das Zwischenprodukt (3) bildet, und der Klassifikations-Loss hauptsächlich auf den Teil, der die Klassifikations-Scores (4) ermittelt, wirkt;
**dadurch gekennzeichnet, dass** das Verfahren zusätzlich die folgenden Schritte umfasst:
• es wird geprüft (150), ob die für eine Teilmenge der Trainings-Beispiele (2a), die mindestens ein ungelabeltes Trainings-Beispiel (2a2) enthält, gebildeten Zwischenprodukte (3) nach Maßgabe eines vorgegebenen Kriteriums (6) zueinander ähnlich sind;
• wenn dies der Fall ist, werden die ungelabelten Trainings-Beispiele (2a2) der Teilmenge mit dieser bevorzugen Klasse (4*) als Label (2b) zu den gelabelten Trainings-Beispielen (2a1) überführt (160); und
• das oder die neuronalen Netzwerke (1) werden mit den auf diese Weise aufgewerteten Trainings-Beispielen (2a*) trainiert (170).

2. Verfahren nach Anspruch 1, wobei zusätzlich geprüft wird, ob die aus der Teilmenge der Trainings-Beispiele (2a) gebildeten Zwischenprodukte
• auf Klassifikations-Scores (4) abgebildet werden, die zumindest die gleiche bevorzugte Klasse (4*) anzeigen, und/oder
• auf Klassifikations-Scores (4) abgebildet werden, die auf Grund einer vorgegebenen Fusionsstrategie als semantisch ähnlich anzusehen sind.

3. Verfahren (100) nach einem der Ansprüche 1 bis 2, wobei bezüglich der ungelabelten Trainings-Beispiele (2a2) mit der Kostenfunktion (5) bewertet wird (131), inwieweit aus diesen Trainings-Beispielen (2a2) erhaltene Zwischenprodukte (3), die von dem oder den neuronalen Netzwerken (1) zumindest auf die gleiche bevorzugte Klasse (4*) abgebildet werden, zueinander ähnlich sind.

4. Verfahren (100) nach einem der Ansprüche 1 bis 3, wobei mindestens ein neuronales Netzwerk (1) gewählt wird, das einen Merkmalsextraktor und einen Klassifikator beinhaltet, wobei die Trainings-Beispiele (2a) dem Merkmalsextraktor zugeführt werden und die Ausgabe des Merkmalsextraktors als Zwischenprodukt (3) dem Klassifikator zugeführt wird.

5. Verfahren (100) nach Anspruch 4, wobei der Merkmalsextraktor eine Abfolge mehrerer Faltungsschichten beinhaltet, die jeweils durch Anwenden eines oder mehrere Filterkerne in einem vorgegebenen Raster auf ihre Eingabe eine Merkmalskarte dieser Eingabe bilden.

6. Verfahren (100) nach einem der Ansprüche 4 bis 5, wobei der Klassifikator mindestens eine vollvernetzte Schicht beinhaltet.

7. Verfahren (100) nach einem der Ansprüche 1 bis 6, wobei für das Training mit den aufgewerteten Trainings-Beispielen (2a*) die Parameter (1a) des oder der neuronalen Netzwerke (1) neu initialisiert werden (171).

8. Verfahren (100) nach einem der Ansprüche 1 bis 6, wobei das Training mit den aufgewerteten Trainings-Beispielen (2a*) auf dem vorhandenen Stand der Parameter (1a) des oder der neuronalen Netzwerke (1) aufbaut (172).

9. Verfahren (100) nach einem der Ansprüche 1 bis 8, wobei dem oder den trainierten neuronalen Netzwerken (1*) nach dem Training Records von Messdaten (2) zugeführt werden (180), die aus verschiedenen Perspektiven, und/oder mit verschiedenen Abbildungsmodalitäten, aufgenommen wurden.

10. Verfahren (100) nach Anspruch 9, wobei eine Ähnlichkeit von aus verschiedenen Records von Messdaten (2) ermittelten Zwischenprodukten (3) als Indikator dafür gewertet wird (190), dass diese Records das Vorhandensein des gleichen Objekts in einem oder mehreren Erfassungsbereichen eines oder mehrerer Sensoren anzeigen.

11. Verfahren (100) nach Anspruch 10, wobei die Wertung, dass die Records das Vorhandensein des gleichen Objekts in einem oder mehreren Erfassungsbereichen anzeigen, zusätzlich davon abhängig gemacht wird (191), dass ein räumlicher und/oder zeitlicher Zusammenhang zwischen den Records eine vorgegebene Bedingung erfüllt.

12. Verfahren (100) nach einem der Ansprüche 1 bis 11, wobei Messdaten (2) bzw. Trainings-Beispiele (2a) gewählt werden, die von mehreren Sensoren mit nicht-identischen räumlichen Erfassungsbereichen aufgenommen wurden.

13. Verfahren (100) nach einem der Ansprüche 1 bis 12, wobei Messdaten (2) bzw. Trainings-Beispiele (2a) gewählt werden, die Kamerabilder, Videobilder, Wärmebilder, Ultraschallbilder, Radar-Daten und/oder Lidar-Daten umfassen.

14. Verfahren (100) nach einem der Ansprüche 1 bis 13, wobei
• aus der Ausgabe (4) des oder der trainierten neuronalen Netzwerke (1*) ein Ansteuersignal (200a) ermittelt wird (200) und
• ein Fahrzeug (50), ein Fahrassistenzsystem (60), ein System (70) für die Qualitätskontrolle, ein System (80) für die Überwachung von Bereichen, und/oder ein System (90) für die medizinische Bildgebung, mit dem Ansteuersignal (200a) angesteuert wird (210).

15. Computerprogramm, enthaltend maschinenlesbare Anweisungen, die, wenn sie auf einem oder mehreren Computern und/oder Compute-Instanzen ausgeführt werden, den oder die Computer bzw. Compute-Instanzen dazu veranlassen, das Verfahren (100) nach einem der Ansprüche 1 bis 14 auszuführen.

16. Maschinenlesbarer Datenträger und/oder Downloadprodukt mit dem Computerprogramm nach Anspruch 15.

17. Ein oder mehrere Computer mit den Computerprogramm nach Anspruch 15, und/oder mit dem maschinenlesbaren Datenträger und/oder Downloadprodukt nach Anspruch 16.

## Claims

1. Method (100) for training one or more neural networks (1) that process measurement data (2) captured by multiple sensors, in particular images captured from different perspectives, and/or under different measurement modalities, relating to classification scores (4) for one or more classes of a predefined classification, comprising the following steps:
• training examples (2a) for measurement data (2) are provided (110), comprising both training examples (2a1) labelled with target classification scores (2b) and unlabelled training examples (2a2);
• the training examples (2a) are processed (120) by the one or more neural networks (1) to obtain classification scores (4), an intermediate (3), which is a feature map and the output from a feature extractor, also being detected, from which the classification scores (4) are formed;
• a predefined cost function (5), which comprises a classification loss that measures consistency with the classification scores (4) and a contrastive loss that measures the similarity of the intermediates (3), is used to evaluate (130) for the labelled training examples (2a1) the extent to which
∘ the classification scores (4) correspond to the respective target classification scores (2b) and
∘ intermediates (3) formed from similar training examples (2a1) are similar, while at the same time intermediates (3) formed from dissimilar training examples (2a1) are dissimilar; and
• parameters (1a) that characterize the behaviour of the one or more neural networks (1) are optimized (140) with the aim of ensuring that further processing of training examples (2a1) will result in the evaluation (5a) by the cost function (5) probably being improved;
wherein there is a division of tasks in the one or more neural networks (1) to the effect that a specific portion of the architecture forms the intermediate and another portion of the architecture determines the classification scores (4) from the intermediate (3), with the result that the contrastive loss mainly affects the portion that forms the intermediate (3) and the classification loss mainly affects the portion that determines the classification scores (4);
**characterized in that** the method additionally comprises the following steps:
• checking is performed (150) to ascertain whether the intermediates (3) formed for a subset of the training examples (2a) containing at least one unlabelled training example (2a2) are similar according to a predefined criterion (6);
• if this is the case, the unlabelled training examples (2a2) in the subset are transferred (160) to the labelled training examples (2a1) with this preferred class (4*) as label (2b); and
• the one or more neural networks (1) are trained (170) with the training examples (2a*) enhanced in this way.

2. Method according to Claim 1, involving additionally checking whether the intermediates formed from the subset of the training examples (2a)
• are mapped to classification scores (4) that indicate at least the same preferred class (4*), and/or
• are mapped to classification scores (4) that can be regarded as semantically similar based on a predefined fusion strategy.

3. Method (100) according to either of Claims 1 to 2, wherein the cost function (5) is used to evaluate (131) for the unlabelled training examples (2a2) the extent to which intermediates (3) obtained from these training examples (2a2) and mapped by the one or more neural networks (1) at least to the same preferred class (4*) are similar.

4. Method (100) according to one of Claims 1 to 3, wherein at least one neural network (1) is selected that contains a feature extractor and a classifier, the training examples (2a) being supplied to the feature extractor and the output from the feature extractor being supplied to the classifier as an intermediate (3).

5. Method (100) according to Claim 4, wherein the feature extractor comprises a sequence of multiple convolution layers, each of which applies one or more filter kernels in a predefined grid to its input to form a feature map of this input.

6. Method (100) according to either of Claims 4 to 5, wherein the classifier comprises at least one fully connected layer.

7. Method (100) according to one of Claims 1 to 6, wherein the parameters (1a) of the one or more neural networks (1) are reinitialized (171) for the training with the enhanced training examples (2a*).

8. Method (100) according to one of Claims 1 to 6, wherein the training with the enhanced training examples (2a*) is based (172) on the existing status of the parameters (1a) of the one or more neural networks (1).

9. Method (100) according to one of Claims 1 to 8, wherein the one or more trained neural networks (1*) are supplied (180), following training, with records of measurement data (2) that have been captured from different perspectives, and/or under different imaging modalities.

10. Method (100) according to Claim 9, wherein a similarity of intermediates (3) determined from different records of measurement data (2) is assessed (190) as an indicator of these records indicating the presence of the same object in one or more detection ranges of one or more sensors.

11. Method (100) according to Claim 10, wherein the assessment that the records indicate the presence of the same object in one or more detection ranges is additionally made dependent (191) on a spatial and/or temporal relationship between the records satisfying a predefined condition.

12. Method (100) according to one of Claims 1 to 11, wherein measurement data (2) or training examples (2a) are selected that have been captured by multiple sensors having non-identical spatial detection ranges.

13. Method (100) according to one of Claims 1 to 12, wherein measurement data (2) or training examples (2a) are selected that comprise camera images, video images, thermal images, ultrasound images, radar data and/or lidar data.

14. Method (100) according to one of Claims 1 to 13, wherein
• a control signal (200a) is determined (200) from the output (4) from the one or more trained neural networks (1*) and
• a vehicle (50), a driver assistance system (60), a system (70) for quality control, a system (80) for monitoring areas and/or a system (90) for medical imaging is controlled (210) by the control signal (200a).

15. Computer program containing machine-readable instructions that, when executed on one or more computers and/or compute instances, cause the one or more computers or compute instances to carry out the method (100) according to one of Claims 1 to 14.

16. Machine-readable data carrier and/or download product comprising the computer program according to Claim 15.

17. One or more computers comprising the computer program according to Claim 15 and/or comprising the machine-readable data carrier and/or download product according to Claim 16.

## Revendications

1. Procédé (100) permettant d'entraîner un ou plusieurs réseaux neuronaux (1), qui traitent des données de mesure (2) enregistrées par plusieurs capteurs, en particulier des images, qui ont été enregistrées depuis différentes perspectives et/ou avec différentes modalités de mesure, à des scores de classification (4) concernant une ou plusieurs classes d'une classification prédéfinie, avec les étapes :
• des exemples d'entraînement (2a) pour des données de mesure (2) sont fournis (110), qui comprennent à la fois des exemples d'entraînement (2a1) étiquetés avec des scores de classification de consigne (2b) et des exemples d'entraînement non étiquetés (2a2) ;
• les exemples d'entraînement (2a) sont traités (120) par le ou les réseaux neuronaux (1) à des scores de classification (4), un produit intermédiaire (3), qui est une carte de caractéristiques et la sortie d'un extracteur de caractéristiques, à partir duquel les scores de classification (4) sont formés, étant également détecté ;
• en ce qui concerne les exemples d'entraînement étiquetés (2a1), une fonction de coût (5) prédéfinie, qui contient une perte de classification, qui mesure la concordance avec les scores de classification (4), et une perte contrastive, qui mesure la similitude des produits intermédiaires (3), permet d'évaluer (130) l'étendue selon laquelle
∘ les scores de classification (4) correspondent aux scores de classification de consigne (2b) respectifs et
∘ des produits intermédiaires (3), qui sont formés à partir d'exemples d'entraînement (2a1) similaires les uns par rapport aux autres, sont similaires les uns aux autres, tandis que dans le même temps des produits intermédiaires (3), qui sont formés à partir d'exemples d'entraînement (2a1) non similaires les uns par rapport aux autres, ne sont pas similaires les uns par rapport aux autres ; et
• des paramètres (1a), qui caractérisent le comportement du ou des réseaux neuronaux (1), sont optimisés (140) afin que, dans le cas d'un traitement ultérieur des exemples d'entraînement (2a1), l'évaluation (5a) soit susceptible d'être améliorée par la fonction de coût (5) ;
une division du travail étant de mise dans le ou les réseaux neuronaux (1) en ce qu'une certaine partie de l'architecture forme le produit intermédiaire et qu'une autre partie de l'architecture détermine les scores de classification (4) à partir du produit intermédiaire (3), de telle sorte que la perte contrastive agit principalement sur la partie qui forme le produit intermédiaire (3), et la perte de classification agit principalement sur la partie qui détermine les scores de classification (4) ;
**caractérisé en ce que** le procédé comprend en supplément les étapes suivantes :
• il est vérifié (150) si les produits intermédiaires (3) formés pour un sous-ensemble des exemples d'entraînement (2a), qui contient au moins un exemple d'entraînement non étiqueté (2a2), sont similaires les uns aux autres selon un critère prédéfini (6) ;
• si cela est le cas, les exemples d'entraînement non étiquetés (2a2) du sous-ensemble avec ladite classe préférée (4*) sont transférés (160) comme étiquette (2b) aux exemples d'entraînement étiquetés (2a1) ; et
• le ou les réseaux neuronaux (1) sont entraînés (170) avec les exemples d'entraînement (2a*) ainsi améliorés.

2. Procédé selon la revendication 1, **caractérisé en ce qu'**il est vérifié en supplément si les produits intermédiaires formés à partir du sous-ensemble des exemples d'entraînement (2a)
• sont mis en correspondance avec des scores de classification (4), qui indiquent au moins la même classe préférée (4*), et/ou
• sont mis en correspondance avec des scores de classification (4), qui doivent être considérés comme sémantiquement similaires sur la base d'une stratégie de fusion prédéfinie.

3. Procédé (100) selon l'une des revendications 1 à 2, la fonction de coût (5) permettant d'évaluer (131), en ce qui concerne les exemples d'entraînement non étiquetés (2a2), l'étendue selon laquelle des produits intermédiaires (3) obtenus à partir desdits exemples d'entraînement (2a2), qui sont mis en correspondance par le ou les réseaux neuronaux (1) au moins sur la même classe préférée (4*), sont similaires les uns aux autres.

4. Procédé (100) selon l'une des revendications 1 à 3, au moins un réseau neu-ronal (1) étant sélectionné, qui contient un extracteur de caractéristiques et un classificateur, les exemples d'entraînement (2a) étant amenés à l'extracteur de caractéristiques et la sortie de l'extracteur de caractéristiques étant amenée en tant que produit intermédiaire (3) au classificateur.

5. Procédé (100) selon la revendication 4, l'extracteur de caractéristiques contenant une séquence de plusieurs couches de convolution, qui forment chacune une carte de caractéristiques en appliquant un ou plusieurs noyaux filtrants dans une grille prédéfinie sur leur entrée.

6. Procédé (100) selon l'une des revendications 4 à 5, le classificateur contenant au moins une couche entièrement connectée.

7. Procédé (100) selon l'une des revendications 1 à 6, les paramètres (1a) du ou des réseaux neuronaux (1) étant réinitialisés (171) pour l'entraînement avec les exemples d'entraînement améliorés (2a*).

8. Procédé (100) selon l'une des revendications 1 à 6, l'entraînement avec les exemples d'entraînement améliorés (2a*) s'appuyant (172) sur l'état existant des paramètres (1a) du ou des réseaux neuronaux (1).

9. Procédé (100) selon l'une des revendications 1 à 8, des enregistrements de données de mesure (2), qui ont été enregistrés depuis différentes perspectives et/ou avec différentes modalités de reproduction, étant amenés (180) au ou aux réseaux neuronaux (1*) entraînés après l'entraînement.

10. Procédé (100) selon la revendication 9, une similitude de produits intermédiaires (3) déterminés à partir de différents enregistrements de données de mesure (2) étant évaluée (190) en tant qu'indicateur indiquant que lesdits enregistrements indiquent la présence du même objet dans une ou plusieurs zones de détection d'un ou de plusieurs capteurs.

11. Procédé (100) selon la revendication 10, l'évaluation selon laquelle les enregistrements indiquent la présence du même objet dans une ou plusieurs régions de détection étant en supplément rendue dépendante (191) du fait qu'une relation spatiale et/ou temporelle entre les enregistrements satisfait une condition prédéfinie.

12. Procédé (100) selon l'une des revendications 1 à 11, des données de mesure (2) ou des exemples d'entraînement (2a) étant sélectionnés, qui ont été enregistrés par plusieurs capteurs avec des zones de détection spatiales non identiques.

13. Procédé (100) selon l'une des revendications 1 à 12, des données de mesure (2) ou des exemples d'entraînement (2a) étant sélectionnés, lesquels comprennent des images de caméra, des images vidéo, des images thermiques, des images ultrasonores, des données radar et/ou des données lidar.

14. Procédé (100) selon l'une des revendications 1 à 13,
• un signal de pilotage (200a) étant déterminé (200) à partir de la sortie (4) du ou des réseaux neuronaux entraînés (1*), et
• un véhicule (50), un système d'aide à la conduite (60), un système (70) de contrôle de qualité, un système (80) de surveillance de zones et/ou un système (90) d'imagerie médicale, étant pilotés (210) avec le signal de pilotage (200a).

15. Programme informatique contenant des instructions lisibles par machine qui, lorsqu'elles sont exécutées sur un ou plusieurs ordinateurs et/ou une ou plusieurs entités informatiques, amènent le(s) ordinateur(s) à exécuter le procédé (100) selon l'une des revendications 1 à 14.

16. Support de données lisible par machine et/ou produit de téléchargement avec le programme informatique selon la revendication 15.

17. Ordinateur ou ordinateurs avec le programme informatique selon la revendication 15 et/ou le support de données lisible par machine et/ou le produit de téléchargement selon la revendication 16.
